# EUROPÄISCHE PATENTANMELDUNG

(11) **EP 2 395 038 A1**
(43) Veröffentlichungstag der Anmeldung: **14.12.2011**
(21) Anmeldenummer: 10165724.5
(22) Anmeldetag: 11.06.2010
(51) Int. Cl.: C08G 18/70, C08G 18/63

(54) **Polyurethanintegralschaumstoffe mit guter Dimensionsstabilität und hoher Härte**

(71) Anmelder: BASF SE, 67056 Ludwigshafen (DE)
(72) Erfinder: Die Erfindernennung liegt noch nicht vor

(57) **Zusammenfassung**

Die vorliegende Erfindung betrifft ein Verfahren zur Herstellung von Polyurethanintegralschaumstoffen mit einer Dichte von 100 bis 800 g/L bei dem man a) eine Lösung, enthaltend Polyisocyanat und thermoplastisches Polymer, mit b) Polyolen, c) Treibmitteln, und gegebenenfalls d) Kettenverlängerungsmitteln und/oder Vernetzungsmitteln, e) Katalysatoren und f) sonstigen Hilfsmitteln und/oder Zusatzstoffen, zu einer Reaktionsmischung vermischt, in eine Form gibt und zu einem Polyurethanschaumstoffformkörper ausreagieren lässt. Weiter betrifft die vorliegende Erfindung einen Polyurethanintegralschaumstoff, erhältlich nach einem solchen Verfahren.

## Beschreibung

Die vorliegende Erfindung betrifft ein Verfahren zur Herstellung von Polyurethanintegralschaumstoffen mit einer Dichte von 100 bis 800 g/L bei dem man a) eine Lösung, enthaltend Polyisocyanat und thermoplastisches Polymer, mit b) Polyolen, c) Treibmitteln, und gegebenenfalls d) Kettenverlängerungsmitteln und/oder Vernetzungsmitteln, e) Katalysatoren und f) sonstigen Hilfsmitteln und/oder Zusatzstoffen, zu einer Reaktionsmischung vermischt, in eine Form gibt und zu einem Polyurethanschaumstoffformkörper ausreagieren lässt. Weiter betrifft die vorliegende Erfindung einen Polyurethanintegralschaumstoff, erhältlich nach einem solchen Verfahren.

Bei Polyurethanintegralschaumstoffen handelt es sich um Polyurethanformkörper mit kompakter Oberfläche und zelligem Kern. Polyurethanintegralschaumstoffe und ihre Herstellung sind seit langem bekannt und beispielsweise in Modern Shoemaking No.61: Solings, November 2001, Stephen Abbott and Mike George, Satra Technology Centre 2001 beschrieben. Polyurethanintegralschaumstoffe werden in unterschiedlichen Bereichen eingesetzt. Eine typische Verwendung ist die als Schuhsohle, zum Beispiel für Straßenschuhe, Sportschuhe, Sandalen und Stiefel aber auch im Bereich von Automobilinnenausstattung, beispielsweise als Lenkräder, Kopfstützen oder Schaltknöpfe. Weitere mögliche Anwendungen sind die als Stuhlarmlehnen oder als Motorradsitze.

Um die Dimensionsstabilität der Polyurethane zu verbessern werden in der Literatur verschiedene Möglichkeiten diskutiert. Beispielsweise beschreibt EP 1 042 384 die Herstellung von niederdichten, dimensionstabilien Schuhsohlen auf Polyetherol Basis durch den Einsatz großen Mengen an Polyether-Graftpolyolen. Nachteilig an diesem Verfahren sind die deutlich schlechteren mechanischen Eigenschaften im Vergleich zu Schuhsohlen auf Polyesterol Basis. Ferner wirkt sich der hohe Anteil an Polymerpolyetherolen nachteilig auf die Viskosität der Polyolkomponente aus.

In EP 1 790 675 und EP 1 756 187 wird der Einsatz von Polymerpolyolen auf Basis von Polyesterolen in einen Polyesterpolyurethan beschrieben. Durch die höhere Viskosität der großen Mengen an Polyester-Polymerpolyol sind diese Systeme deutlich schwieriger zu verarbeiten. Ferner offenbaren EP 1 790 675 und EP 1 756 187 den Einsatz von Polymerpolyolen auf Polyetherolbasis in Polyesterolpolyurethansystem. Die Schriften lehren, dass der Einsatz von Ether-Polymerpolyen sich nachteilig auf die Schaummorphologie auswirkt.

Aufgabe der vorliegenden Erfindung war es daher, ein Verfahren zur Herstellung von Polyurethanintegralschaumstoffen zu liefern, wobei der Polyurethanschaumstoff nicht oder nur unwesentlich schrumpft und hervorragende Eigenschaften, wie Härte, Zugfestigkeit und Weiterreißfestigkeit aufweist.

Überraschenderweise wird die erfindungsgemäß Aufgabe durch ein Verfahren gelöst, bei dem man a) eine Lösung, enthaltend Polyisocyanat und thermoplastisches Polymer, mit b) Polyolen, c) Treibmitteln, und gegebenenfalls d) Kettenverlängerungsmitteln und/oder Vernetzungsmitteln, e) Katalysatoren und f) sonstigen Hilfsmitteln und/oder Zusatzstoffen, zu einer Reaktionsmischung vermischt, in eine Form gibt und zu einem Polyurethanschaumstoffformkörper ausreagieren lässt.

Als Polyurethanintegralschaumstoffe im Sinn der Erfindung werden Polyurethan-Schaumstoffe nach DIN 7726 mit einer Randzone, die bedingt durch den Formgebungsprozess eine höhere Dichte als der Kern aufweist, verstanden. Die über den Kern und die Randzone gemittelte Gesamtrohdichte liegt dabei bei 80 bis 800 g/L, vorzugsweise 100 bis 500 g/L, besonders bevorzugt 120 bis 400 g/L und insbesondere 150 bis 300 g/L.

Die in den erfindungsgemäßen Lösungen a) eingesetzten thermoplastischen Polymere umfassen alle bekannten thermoplastischen Polymere. Dabei wird unter einem thermoplastischen Polymer ein Polymer verstanden, welches einen linearen oder verzweigten Kettenaufbau aufweist, in (organischen) Lösemitteln löslich ist und oberhalb der der Gebrauchstemperatur einen Fließübergangsbereich besitzt. Das thermoplastische Polymer im Sinn der vorliegenden Erfindung umfasst dabei Polymere, die aus mindestens 4 gleichen oder unterschiedlichen Monomereinheiten ausgebaut sind und ein Molekulargewicht von mindestens 500 g/mol aufweisen. Vorzugsweise ist das thermoplastische Polymer aus mindestens 6, insbesondere aus mindestens 10 Monomereinheiten aufgebaut. Weiter weist das thermoplastische Polymer vorzugsweise ein Molekulargewicht von mindestens 1000 g/mol, insbesondere von mindestens 5000 g/mol auf. In einer besonders bevorzugten Ausführungsform ist das gewichtsmittlere Molekulargewicht größer 20.000 g/mol, insbesondere größer 50.000 g/mol.

Vorzugsweise können als thermoplastisches Polymer Homopolymere der C1-bis C20 Ester der Acrylsäure oder Methacrylsäure wie zum Beispiel Polymethyl(meth)acrylat, Polyethyl(meth)acrylat, Polypropyl(meth)acrylat oder Polybutyl(meth)acrylat, Copolymere der C1-bis C20 Ester der Acrylsäure oder Methacrylsäure, beispielsweise mit Hydroxyacrylaten und - methacrylaten wie Hydroxyethylacrylat, Hydroxyethylmethacrylat, Hyrodxypropylacrylat, Hydroxyproylmethacrylat, Hydroxybutylacrylat, Hydroxybutylmethacrylat, Hydroxypentylmethacrylat, Hydroxypentylmethacrylat, Hydroxyhexylacrylat, Hydroxyhexylmethacrylat, mit Acrylsäue oder Methacrylsäure, mit C1- bis C20-Ester der von Acrylsäure oder Methacrylsäure, Ester der Acrylsäure oder Methyacrylsäure mit Polyolen auf Basis von Ethylen- und/oder Proylenoxid, mit Styrol, Acrylnitril, Maleinsäure bzw. Maleinsäureanhydrid, Crotonsäure, Fumarsäure, Itaconsäure, Acrylamid, N,N-Dimethylacrylamid, N,N-Dibenzylacrylamid, N-Butylacrylamid, Methacryloylformamid und ähnliche Derivate; Vinylester, Vinylether, Vinylketone, etc. wie Vinylacetat, Vinylbutyrat, Isopropenylacetat, Vinylformiat, Vinylacrylate, Vinylmethacrylat, Vinylmethoxyacetat, Vinylbenzoat, Vinyltoluol, Vinylnaphtalin, Vinylmethylether, Vinylpropylether, Vinylbutylether, Vinyl-2-ethylhexylether, Vinylphenylether, Vinyl-2-methoxyethylether, Methoxybutadien, Vinyl-2-butoxyethylether, 2,4-Dihydro-1,2-Pyran, 2-Butoxy-2'-Vinyloxydiethylether, Vinylmethylketon, Vinylethylketon, Vinylphenyketon, Vinylethylsulfon, N-methyl-N-vinylacetamid, N-vinylpyrrolidon, vinylimidazol oder quaterniertem Vinylimidazol, Dinvinylsulfoxid, Divinylsulfon, Natrium-vinylsulfonat, Methylvinylsulfonat, N-Vinylpyrrol, Vinylphosphonat, und ähnliche Derivate; Dimethylfumarat, Dimethylmaleat, Monomethylitaconat, t-Butylaminoethyl-methacrylat, Dimethylaminoethyl-methacrylat, Glycidylacrylat oder Glycidylmethacrylat, Allylalkohol, Glycolmonoester von Itaconsäure, Butadien oder Isopren, Ethylen oder Propylen oder Homo und/oder Copolymere des Vinylpyrrolidions oder des Vinylacetats mit einem der oben beschrieben Monomere eingesetzt werden. Besonders bevorzugt ist das thermoplastische Polymer ausgewählt aus der Gruppe, bestehend aus Homopolymeren der C1-bis C20 Ester der (Meth)acrylsäure Copolymeren der C1-bis C20 Ester der (Meth)acrylsäure, Styrol-Butadien-Copolymeren, AcrylnitrilButadien-Styrol-Copolymeren, Butadiencopolymeren, Polyvinylpyrrolidon oder Vinylpyrrolidoncopolymeren, Polyvinylacetat oder Vinylacetatcopolymeren oder Mischungen aus zwei oder mehreren dieser thermoplastischen Polymere.

Zur Herstellung der erfindungsgemäßen Lösung (a) wird das thermoplastische Polymer in Polyisocyanat gelöst. Als Polyisocyanat kann dabei jedes zur Herstellung von Polyurethanen bekanntes Polyisocyanat eingesetzt werden. Diese umfassen die aus dem Stand der Technik bekannten aliphatischen, cycloaliphatischen und aromatischen zwei- oder mehrwertigen Isocyanate sowie beliebige Mischungen daraus. Beispiele sind 2,2'-, 2,4'- und 4,4'-Diphenylmethandiisocyanat (MDI) oder die kernhydrierten analogen Verbindungen, die Mischungen aus monomeren Diphenylmethandiisocyanaten und höherkernigen Homologen des Diphenylmethandiisocyanats (Polymer-MDI), Isophorondiisocyanat (IPDI) oder dessen Oligomere, 2,4- oder 2,6-Toluylendiisocyanat (TDI) oder deren Mischungen, Tetramethylendiisocyanat oder dessen Oligomere, Hexamethylendiisocyanat (HDI) oder dessen Oligomere, Naphtylendiisocyanat (NDI) oder Mischungen daraus.

Vorzugsweise werden aromatische Di und/oder Polyisocyanate eingesetzt, das heißt, Isocyanate mit mindestens zwei Isocyanatgruppen pro Molekül, bei denen die Isocyanatgruppen direkt an ein aromatisches System gebunden sind. Als aromatische Isocyanate werden bevorzugt 4,4'-MDI, 2,2'-MDI, 2,4'-MDI, Polymer-MDI und/oder TDI sowie Mischungen dieser Isocyanate, besonders bevorzugt 4,4'-MDI, 2,2'-MDI, 2,4'-MDI, Polymer-MDI verwendet. Das besonders bevorzugt im Polyisocyanat enthaltene 4,4'-MDI kann Anteile von uretdion-, allophanat- oder uretoniminmodifizierte Polyisocyanate enthalten.

Das Polyisocyanat kann auch in Form von Polyisocyanatprepolymeren eingesetzt werden. Diese Polyisocyanatprepolymere sind erhältlich, indem vorstehend beschriebene Polyisocyanate im Überschuss, beispielsweise bei Temperaturen von 30 bis 120 °C, bevorzugt bei etwa 80 °C, mit Polyolen zum Prepolymer umgesetzt werden. Als Polyole können dabei alle unter b) beschriebenen Polyole eingesetzt werden.

Gegebenenfalls können der Umsetzung zum Polyisocyanatprepolymer noch Kettenverlängerungsmittel zugegeben werden. Als Kettenverlängerungsmittel für das Prepolymer können alle Kettenverlängerungsmittel, die auch unter (c) beschrieben sind, eingesetzt werden. Dabei sind beispielsweise zweiwertige Alkohole, beispielsweise Dipropylenglykol, Tripropylenglycol und/oder oder die Addukte von Dipropylenglykol mit Alkylenoxiden, bevorzugt Propylenoxid, Ethylenoxid und/oder Mischungen geeignet.

Wird ein Polyisocyanatprepolymer eingesetzt, weist das verwendete Polyisocyanat vorzugsweise einen Isocyanatgehalt von größer 5 Gew.-%, besonders bevorzugt größer 7,5 Gew.-% auf.

Als Lösung (a) werden insbesondere Lösungen aus Polymethylmethacrylat und MDI; Po-ly(Methylmethacrylat-co-Hydroxyethylacrylat) und MDI; Poly(Methylmethacrylat-co-Hydroxyethylmethacrylat) und MDI; Poly(Methylmethacrylat-co-Acrylsäure) und MDI; Poly(Methylmethacrylat-co-Methacrylsäure) und MDI; Poly(Methylmethacrylat-co-Butylacrylat) und MDI; Poly(Methylmethacrylat-co-Butylmethacrylat) und MDI; Poly(Methylmethacrylat-co-Ethylhexylacrylat) und MDI, Poly(Methylmethacrylat-co-Hydroxyethylmethacrylat-co-Ethylhexylacrylat) und MDI; Poly(Methylmethacrylat-co-Vinylimdazol) mit MDI; Poly(Methylmethacrylat-co-quaterniertem Vinylimidazol) und MDI; Polymethylmethacrylat und MDI; Polybutylmethacrylat und MDI; Poly(Methylmethacrylat-co-Laurylmethacrylat) und MDI; Poly(Methylmethacrylat-co-Styrol) und MDI; Poly(Styrol-co-butadien) und MDI; Polyvinylacetat und MDI; Polyvinylpyrrolidon und MDI; Poly(vinylpyrrolidon-co-vinylacetat) und MDI; Poly(Acrylnitril-co-Butadien-co-Polymethylmethacrylat und PMDI; Poly(Methylmethacrylat-co-Hydroxyethylacrylat) und PMDI; Poly(Methylmethacrylat-co-Hydroxyethylmethacrylat) und PMDI; Poly(Methylmethacrylat-co-Acrylsäure) und PMDI; Poly(Methylmethacrylat-co-Methacrylsäure) und PMDI; Poly(Methylmethacrylat-co-Butylacrylat) und PMDI; Poly(Methylmethacrylat-co-Butylmethacrylat) und PMDI; Poly(Methylmethacrylat-co-Ethylhexylacrylat) und PMDI, Poly(Methylmethacrylat-co-Hydroxyethylmethacrylat-co-Ethylhexylacrylat) und PMDI; Poly(Methylmethacrylat-co-Vinylimdazol) mit PMDI; Po-ly(Methylmethacrylat-co-quaterniertem Vinylimidazol) und PMDI; Polymethylmethacrylat und PMDI; Polybutylmethacrylat und PMDI; Poly(Methylmethacrylat-co-Laurylmethacrylat) und PMDI; Polyvinylacetat und PMDI; Polyvinylpyrrolidon und PMDI; Poly(vinylpyrrolidon-co-vinylacetat) und PMDI;, oder Mischungen mit TDI, MDI, PMDI oder HDI eingesetzt.

Die erfindungsgemäßen Lösungen enthalten dabei vorzugsweise im Wesentlichen keine weiteren Lösungsmittel. Als Lösungsmittel werden dabei alle üblichen Lösungsmittel angesehen, nicht aber das Isocyanat oder das thermoplastische Polymer selbst. Dabei bedeutet "im Wesentlichen kein weiteres Lösungsmittel", dass die erfindungsgemäße Lösung a) weniger als 2 Gew.-%, besonders bevorzugt weniger als 0,5 Gew.-% und insbesondere weniger als 0,01 Gew.-% Lösungsmittel, bezogen auf das Gesamtgewicht der Lösung (a) enthält. Vorzugsweise werden keine Lösungsmittel zur Herstellung der Lösung (a) zugegeben bzw. sind keine Lösungsmittel in den Ausgangskomponenten zur Herstellung der Lösung (a) enthalten. Lösungsmittelreste, die Herstellungsbedingt in den Ausgangskomponenten zur Herstellung der Lösung (a) enthalten sind, fallen nicht unter diese Beschränkung. Ebenfalls werden das Polyisocyanat selbst oder das thermoplastische Polymer selbst nicht als Lösungsmittel im Sinn dieser Beschränkung angesehen.

Zur Herstellung der Lösung (a) werden das thermoplastische Polymer und das Polyisocyanat vermischt und gegebenenfalls erwärmt. Vorzugsweise wird nach dem Vermischen auf eine Temperatur von 20 bis 200 °C, besonders bevorzugt 30 bis 150 und insbesondere auf 60 bis 120 °C erwärmt.

Vorzugsweise enthält die Lösung (a) neben Polyisocyanat und thermoplastischem Polymer weniger als 5 Gew.-%, besonders bevorzugt weniger als 2 Gew.-% und insbesondere weniger als 1 %, bezogen auf das Gesamtgewicht der Lösung (a), weitere Stoffe.

Der Anteil an thermoplastischem Polymer in der Lösung (a) beträgt vorzugsweise 0,1 bis 50 Gew.-%, besonders bevorzugt 0,5 bis 30 Gew.-% und insbesondere 1 bis 20 Gew.-%, bezogen auf das Gesamtgewicht von Polyisocyanats und des thermoplastischen Polymers.

Ein weiteres Verfahren zur Herstellung der Lösung (a) ist es, Monomere des thermoplastischen Polymers in dem Isocyanat zu lösen und diese anschließend radikalisch zu polymerisieren. Dabei können übliche Radikalstarter eingesetzt werden. Der Anteil an Monomer im Isocyanat entspricht dabei der späteren Konzentration des thermoplastischen Polymers.

Dabei liegt die Lösung (a) als stabile, klare Lösung vor. Dabei bedeutet "klare Lösung", dass sich die Transmission der Lösung (a) bei 80 °C und 1 cm Schichtdicke nach Auflösen des thermoplastischen Polymers im Polyisocyanat um weniger als 50 % gegenüber dem reinen Isocyanat ändert. Vorzugsweise wird unter einer klaren Lösung eine Lösung verstanden, die einen Formazin Trübungswert (Formazin Turbidity Unit = FTU) gemessen nach DIN ISO 15715:2003 von kleiner 200 FTU besitzt. Bevorzugt besitzt die Lösung ein FTU-Wert von kleiner 100 und besonders bevorzugt von kleiner 50 FTU.

Die Lösung (a) weist dabei vorzugsweise eine Nullscherviskosität bei 25 °C von kleiner 110.000 mPas, besonders bevorzugt kleiner 75.000 mPas und besonders bevorzugt kleiner 50.000 mPas.

Die erfindungsgemäße Lösung (a) weist vorzugsweise einen NCO-Gehalt von größer 5 Gew.-%, besonders bevorzugt größer 7,5 Gew.-% auf.

Als Polyole b) können alle in der Polyurethanchemie üblicherweise eingesetzten Polyole verwendet werden. Dabei werden als Polyole alle Verbindungen mit einem Molekulargewicht von mindestens 500 g/mol und mindestens zwei gegenüber Isocyanat reaktiven Wasserstoffatomen pro Molekül im Rahmen dieser Erfindung eingesetzt. Diese umfassen übliche Polyetherole und Polyesterole.

Polyetherole werden nach bekannten Verfahren hergestellt, beispielsweise durch anionische Polymerisation mit Alkalihydroxiden oder Alkalialkoholaten als Katalysatoren und unter Zusatz mindestens eines Startermoleküls, das 2 bis 3 reaktive Wasserstoffatome gebunden enthält, oder durch kationische Polymerisation mit Lewis-Säuren, wie Antimonpentachlorid oder Borfluorid-Etherat aus einem oder mehreren Alkylenoxiden mit 2 bis 4 Kohlenstoffatomen im Alkylenrest. Geeignete Alkylenoxide sind beispielsweise Tetrahydrofuran, 1,3-Propylenoxid, 1,2- bzw. 2,3-Butylenoxid und vorzugsweise Ethylenoxid und 1,2-Propylenoxid. Weiter können als Katalysatoren auch Multimetallcyanidverbindungen, sogenannte DMC-Katalysatoren, eingesetzt werden. Die Alkylenoxide können einzeln, alternierend nacheinander oder als Mischungen verwendet werden. Bevorzugt werden Mischungen aus 1,2-Propylenoxid und Ethylenoxid, wobei das Ethylenoxid in Mengen von 10 bis 50 % als Ethylenoxid-Endblock eingesetzt wird ("EO-cap"), so dass die entstehenden Polyole zu über 70 % primäre OH-Endgruppen aufweisen.

Als Startermolekül kommen Wasser oder 2- und 3-wertige Alkohole, wie Ethylenglykol, 1,2- und 1,3-Propandiol, Diethylenglykol, Dipropylenglykol, 1,4-Butandiol, Glycerin oder Trimethylolpropan in Betracht.

Die Polyetherpolyole, vorzugsweise Polyoxypropylen-polyoxyethylen-polyole, besitzen vorzugsweise eine Funktionalität von 2 bis 3 und Molekulargewichte von 1.000 bis 8.000, vorzugsweise von 2.000 bis 6.000 g/mol.

Polyesterpolyole können beispielsweise aus organischen Dicarbonsäuren mit 2 bis 12 Kohlenstoffatomen, vorzugsweise aliphatischen Dicarbonsäuren mit 4 bis 6 Kohlenstoffatomen und mehrwertigen Alkoholen, vorzugsweise Diolen, mit 2 bis 12 Kohlenstoffatomen, vorzugsweise 2 bis 6 Kohlenstoffatomen, hergestellt werden. Als Dicarbonsäuren kommen beispielsweise in Betracht: Bernsteinsäure, Glutarsäure, Adipinsäure, Korksäure, Azelainsäure, Sebacinsäure, Decandicarbonsäure, Maleinsäure, Fumarsäure, Phthalsäure, Isophthalsäure und Terephthalsäure. Die Dicarbonsäuren können dabei sowohl einzeln als auch im Gemisch untereinander verwendet werden. Anstelle der freien Dicarbonsäuren können auch die entsprechenden Dicarbonsäurederivate, wie z.B. Dicarbonsäureester von Alkoholen mit 1 bis 4 Kohlenstoffatomen oder Dicarbonsäureanhydride eingesetzt werden. Vorzugsweise verwendet werden Dicarbonsäuregemische aus Bernstein-, Glutar- und Adipinsäure in Mengenverhältnissen von beispielsweise 20 bis 35 : 35 bis 50 : 20 bis 32 Gew.-Teilen, und insbesondere Adipinsäure. Beispiele für zwei und mehrwertige Alkohole, insbesondere Diole sind: Ethandiol, Diethylenglykol, 1,2- bzw. 1,3-Propandiol, Dipropylenglykol, 1,4-Butandiol, 1,5-Pentandiol, 1,6-Hexandiol, 1,10-Decandiol, Glycerin und Trimethylolpropan. Vorzugsweise verwendet werden Ethandiol, Diethylenglykol, 1,4-Butandiol, 1,5-Pentandiol und 1,6-Hexandiol. Eingesetzt werden können ferner Polyesterpolyole aus Lactonen, z.B. ε-Caprolacton oder Hydroxycarbonsäuren, z.B. w-Hydroxycapronsäure.

Zur Herstellung der Polyesterpolyole können die organischen, z.B. aromatischen und vorzugsweise aliphatischen Polycarbonsäuren und/oder -derivate und mehrwertigen Alkohole katalysatorfrei oder vorzugsweise in Gegenwart von Veresterungskatalysatoren, zweckmäßigerweise in einer Atmosphäre aus Inertgas, wie z.B. Stickstoff, Kohlenmonoxid, Helium, Argon u.a. in der Schmelze bei Temperaturen von 150 bis 250°C, vorzugsweise 180 bis 220°C, gegebenenfalls unter vermindertem Druck, bis zu der gewünschten Säurezahl, die vorzugsweise kleiner als 10, besonders bevorzugt kleiner als 2 ist, polykondensiert werden. Nach einer bevorzugten Ausführungsform wird als Veresterungsgemisch bei den oben genannten Temperaturen bis zu einer Säurezahl von 80 bis 30, vorzugsweise 40 bis 30, unter Normaldruck und anschließend unter einem Druck von kleiner als 500 mbar, vorzugsweise 50 bis 150 mbar, polykondensiert. Als Veresterungskatalysatoren kommen beispielsweise Eisen-, Cadmium-, Kobalt-, Blei-, Zink-, Antimon-, Magnesium-, Titan- und Zinnkatalysatoren in Form von Metallen, Metalloxiden oder Metallsalzen in Betracht. Die Polykondensation kann jedoch auch in flüssiger Phase in Gegenwart von Verdünnungs- und/oder Schleppmitteln, wie z.B. Benzol, Toluol, Xylol oder Chlorbenzol zur azeotropen Abdestillation des Kondensationswassers durchgeführt werden. Zur Herstellung der Polyesterpolyole werden die organischen Polycarbonsäuren und/oder -derivate und mehrwertigen Alkohole vorteilhafterweise im Molverhältnis von 1 : 1 bis 1,8, vorzugsweise 1 : 1,05 bis 1,2 polykondensiert.

Die erhaltenen Polyesterpolyole besitzen vorzugsweise eine Funktionalität von 2 bis 4, insbesondere von 2 bis 3, und ein Molekulargewicht von 500 bis 5000, vorzugsweise 1000 bis 3000 g/mol.

Als höhermolekulare Verbindungen b) mit mindestens zwei gegenüber Isocyanat reaktiven Wasserstoffatomen eignen sich ferner polymermodifizierte Polyole, vorzugsweise polymermodifizierte Polyesterole oder Polyetherole, besonders bevorzugt Pfropf-Polyether- bzw. Pfropf-Polyesterole. Hierbei handelt es sich um ein sogenanntes Polymerpolyol, welches üblicherweise einen Gehalt an, bevorzugt thermoplastischen, Polymeren von 5 bis 60 Gew.-%, bevorzugt 10 bis 55 Gew.-%, besonders bevorzugt 30 bis 55 Gew.-% und insbesondere 40 bis 50 Gew.-%, aufweist. Diese Polymerpolyesterole sind beispielsweise in WO 05/098763 und EP-A-250 351 beschrieben und werden üblicherweise durch radikalische Polymerisation von geeigneten olefinischen Monomeren, beispielsweise Styrol, Acrylnitril, (Meth)Acrylaten, (Meth)Acrylsäure und/oder Acrylamid, in einem als Pfropfgrundlage dienenden Polyesterol hergestellt. Die Seitenketten entstehen im allgemeinen durch Übertragung der Radikale von wachsenden Polymerketten auf Polyesterole oder Polyetherole. Das Polymer-Polyol enthält neben dem Propfcopolymerisaten überwiegend die Homopolymere der Olefine, dispergiert in unverändertem Polyesterol bzw. Polyetherol.

In einer bevorzugten Ausführungsform werden als Monomere Acrylnitril, Styrol, Acrylnitril und Styrol, insbesondere bevorzugt ausschließlich Styrol verwendet. Die Monomere werden gegebenenfalls in Gegenwart weiterer Monomere, eines Makromers, eines Moderators und unter Einsatz eines Radikal-Initiators, meist Azo- oder Peroxidverbindungen, in einem Polyesterol oder Polyetherol als kontinuierlicher Phase polymerisiert. Dieses Verfahren ist beispielsweise in DE 111 394, US 3 304 273, US 3 383 351, US 3 523 093, DE 1 152 536 und DE 1 152 537 beschrieben.

Während der radikalischen Polymerisation werden die Makromere mit in die Copolymerkette eingebaut. Dadurch bilden sich Blockcopolymere mit einem Polyester- bzw. Polyether- und einem Poly-acrylnitril-styrol-Block, welche in der Grenzfläche von kontinuierlicher Phase und dispergierter Phase als Phasenvermittler wirken und das Agglomerieren der Polymerpolyesterolpartikel unterdrücken. Der Anteil der Makromere beträgt üblicherweise 1 bis 20 Gew.-%, bezogen auf das Gesamtgewicht der zur Herstellung des Polymerpolyols eingesetzten Monomere.

Ist in den Polyolen b) Polymerpolyol enthalten, liegt dies vorzugsweise zusammen mit weiteren Polyolen vor, beispielsweise Polyetherolen, Polyesterolen oder Mischungen aus Polyetherolen und Polyesterolen. Besonders bevorzugt ist der Anteil an Polymerpolyol größer als 5 Gew.-%, bezogen auf das Gesamtgewicht der Komponente (b). Die Polymerpolyole können beispielsweise, bezogen auf das Gesamtgewicht der Komponente (b) in einer Menge von 7 bis 90 Gew.-%, oder von 11 bis 80 Gew.-% enthalten sein. Besonders bevorzugt handelt es sich bei dem Polymerpolyol um Polymerpolyesterol oder Polymerpolyetherol.

Vorzugsweise werden als Polyole b) Mischungen, enthaltend Polyesterole und gegebenenfalls Polymerpolyesterole und besonders bevorzugt ausschließlich Polyesterole und/oder Polymerpolyesterole eingesetzt.

Ferner sind bei der Herstellung von Polyurethanintegralschaumstoffen Treibmittel (c) zugegen. Diese Treibmittel c) können Wasser enthalten. Als Treibmittel (c) können neben Wasser noch zusätzlich allgemein bekannte chemisch und/oder physikalisch wirkende Verbindungen eingesetzt werden. Unter chemischen Treibmitteln versteht man Verbindungen, die durch Reaktion mit Isocyanat gasförmige Produkte bilden, wie beispielsweise Wasser oder Ameisensäure. Unter physikalischen Treibmitteln versteht man Verbindungen, die in den Einsatzstoffen der Polyurethan-Herstellung gelöst oder emulgiert sind und unter den Bedingungen der Polyurethanbildung verdampfen. Dabei handelt es sich beispielsweise um Kohlenwasserstoffe, halogenierte Kohlenwasserstoffe, und andere Verbindungen, wie zum Beispiel perfluorierte Alkane, wie Perfluorhexan, Fluorchlorkohlenwasserstoffe, und Ether, Ester, Ketone, Acetale oder Mischungen daraus, beispielsweise cyclo)aliphatische Kohlenwasserstoffe mit 4 bis 8 Kohlenstoffatomen, oder Fluorkohlenwasserstoffe, wie Solkane^{®} 365 mfc der Firma Solvay Fluorides LLC. In einer bevorzugten Ausführungsform wird als Treibmittel eine Mischung enthaltend mindestens eines dieser Treibmittel und Wasser eingesetzt, insbesondere Wasser als alleiniges Treibmittel. Wird kein Wasser als Treibmittel eingesetzt, werden vorzugsweise ausschließlich physikalische Treibmittel verwendet.

Der Gehalt an Wasser beträgt in einer bevorzugten Ausführungsform von 0,1 bis 2 Gew.-%, bevorzugt 0,2 bis 1,5 Gew.-%, besonders bevorzugt 0,3 bis 1,2 Gew.-%, insbesondere 0,4 bis 1 Gew.-%, bezogen auf das Gesamtgewicht der Komponenten (a) bis (f).

In einer weiteren bevorzugten Ausführungsform werden der Umsetzung der Komponenten (a), (b) und gegebenenfalls (d) als zusätzliches Treibmittel Mikrohohlkugeln, die physikalisches

Treibmittel enthalten, zugegeben. Die Mikrohohlkugeln können auch im Gemisch mit den vorstehend genannten Treibmitteln eingesetzt werden.

Die Mikrohohlkugeln bestehen üblicherweise aus einer Hülle aus thermoplastischem Polymer und sind im Kern mit einer flüssigen, niedrig siedenden Substanz auf Basis von Alkanen gefüllt. Die Herstellung solcher Mikrohohlkugeln ist beispielsweise in US 3 615 972 beschrieben. Die Mikrohohlkugeln weisen im Allgemeinen einen Durchmesser von 5 bis 50 µm auf. Beispiele für geeignete Mikrohohlkugeln sind unter dem Handelsnamen Expancell^{®} der Firma Akzo Nobel erhältlich.

Die Mikrohohlkugeln werden im Allgemeinen in einer Menge von 0,5 bis 5 Gew.-%, bezogen auf das Gesamtgewicht der Komponenten (b), (c) und (d) zugesetzt.

Als Kettenverlängerungsmittel und/oder Vernetzungsmittel (d) werden Substanzen mit einem Molekulargewicht von vorzugsweise kleiner 500 g/mol, besonders bevorzugt von 60 bis 400 g/mol eingesetzt, wobei Kettenverlängerer 2 gegenüber Isocyanaten reaktive Wasserstoffatome und Vernetzungsmittel 3 gegenüber Isocyanat reaktive Wasserstoffatome aufweisen. Diese können einzeln oder bevorzugt in Form von Mischungen eingesetzt werden. Vorzugsweise werden Diole und/oder Triole mit Molekulargewichten kleiner als 400, besonders bevorzugt von 60 bis 300 und insbesondere 60 bis 150 eingesetzt. In Betracht kommen beispielsweise aliphatische, cycloaliphatische und/oder araliphatische Diole mit 2 bis 14, vorzugsweise 2 bis 10 Kohlenstoffatomen, wie Ethylenglykol, 1,3-Propandiol, 1,10-Decandiol, 1,2-, 1,3-, 1,4-Dihydroxycyclohexan, Diethylenglykol, Dipropylenglykol und vorzugsweise 1,4-Butandiol, 1,6-Hexandiol und Bis-(2-hydroxyethyl)-hydrochinon, Triole, wie 1,2,4-, 1,3,5-Trihydroxy-cyclohexan, Glycerin und Trimethylolpropan, und niedermolekulare hydroxylgruppenhaltige Polyalkylenoxide auf Basis Ethylen- und/oder 1,2-Propylenoxid und den vorgenannten Diolen und/oder Triolen als Startermoleküle. Besonders bevorzugt werden als Kettenverlängerer (d) Monoethylenglycol, 1,4-Butandiol, Glycerin oder Mischungen davon und insbesondere Monoethylenglycol oder Mischungen, enthaltend Monoethylenglycol, eingesetzt.

Sofern Kettenverlängerungsmittel, Vernetzungsmittel oder Mischungen davon Anwendung finden, kommen diese zweckmäßigerweise in Mengen von 1 bis 60 Gew.-%, vorzugsweise 1,5 bis 50 Gew.-% und insbesondere 2 bis 40 Gew.-%, bezogen auf das Gewicht der Komponenten (b) und (d), zum Einsatz.

Als Katalysatoren (e) zur Herstellung der Polyurethanschaumstoffe werden bevorzugt Verbindungen verwendet, welche die Reaktion der Hydroxylgruppen enthaltenden Verbindungen der Komponente (b) und gegebenenfalls (c) mit den Polyisocyanaten in (a) stark beschleunigen. Genannt seien beispielsweise Amidine, wie 2,3-Dimethyl-3,4,5,6-tetrahydropyrimidin, tertiäre Amine, wie Triethylamin, Tributylamin, Dimethylbenzylamin, N-Methyl-, N-Ethyl-, N-Cyclohexylmorpholin, N,N,N',N'-Tetramethylethylendiamin, N,N,N',N'-Tetramethyl-butandiamin, N,N,N',N'-Tetramethyl-hexandiamin, Pentamethyl-diethylentriamin, Tetramethyl-diaminoethylether, Bis-(dimethylaminopropyl)-harnstoff, Dimethylpiperazin, 1,2-Dimethylimidazol, 1-Aza-bicyclo-(3,3,0)-octan und vorzugsweise 1,4-Diaza-bicyclo-(2,2,2)-octan und Alkanolaminverbindungen, wie Triethanolamin, Triisopropanolamin, N-Methyl- und N-Ethyl-diethanolamin und Dimethylethanolamin. Ebenso kommen in Betracht organische Metallverbindungen, vorzugsweise organische Zinnverbindungen, wie Zinn-(II)-salze von organischen Carbonsäuren, z.B. Zinn-(II)-acetat, Zinn-(II)-octoat, Zinn-(II)-ethylhexoat und Zinn-(II)-laurat und die Dialkylzinn-(IV)-salze von organischen Carbonsäuren, z.B. Dibutyl-zinndiacetat, Dibutylzinndilaurat, Dibutylzinn-maleat und Dioctylzinn-diacetat, sowie Bismutcarboxylate, wie Bismut(III)-neodecanoat, Bismut-2-ethyl-hexanoat und Bismut-octanoat oder Mischungen davon. Die organischen Metallverbindungen können allein oder vorzugsweise in Kombination mit stark basischen Aminen eingesetzt werden. Handelt es sich bei der Komponente (b) um einen Ester, werden vorzugsweise ausschließlich Aminkatalysatoren eingesetzt.

Vorzugsweise verwendet werden 0,001 bis 5 Gew.-%, insbesondere 0,05 bis 2 Gew.-% Katalysator bzw. Katalysatorkombination, bezogen auf das Gewicht der Komponente (b).

Der Reaktionsmischung zur Herstellung der Polyurethanschäume können gegebenenfalls auch noch Hilfsmittel und/oder Zusatzstoffe (f) zugegeben werden. Genannt seien beispielsweise oberflächenaktive Substanzen, Schaumstabilisatoren, Zellregler, Trennmittel, Gummivulkanisationshilfsmittel, Füllstoffe, Farbstoffe, Pigmente, Hydrolyseschutzmittel, geruchsabsorbierende Substanzen und fungistatische und/oder bakteriostatisch wirkende Substanzen.

Als oberflächenaktive Substanzen kommen z.B. Verbindungen in Betracht, welche zur Unterstützung der Homogenisierung der Ausgangsstoffe dienen und gegebenenfalls auch geeignet sind, die Zellstruktur zu regulieren. Genannt seien beispielsweise Emulgatoren, wie die Natriumsalze von Ricinusölsulfaten oder von Fettsäuren, sowie Salze von Fettsäuren mit Aminen, z.B. ölsaures Diethylamin, stearinsaures Diethanolamin, ricinolsaures Diethanolamin, Salze von Sulfonsäuren, z.B. Alkali- oder Ammoniumsalze von Dodecylbenzol- oder Dinaphthylmethandisulfonsäure, und Ricinolsäure; Schaumstabilisatoren, wie Siloxan-Oxalkylen-Mischpolymerisate und andere Organopolysiloxane, oxethylierte Alkylphenole, oxethylierte Fettalkohole, Paraffin-öle, Ricinusöl- bzw. Ricinolsäureester, Türkischrotöl und Erdnussöl, und Zellregler, wie Paraffine, Fettalkohole und Dimethylpolysiloxane. Zur Verbesserung der Emulgierwirkung, der Zellstruktur und/oder Stabilisierung des Schaumes eignen sich ferner oligomere Acrylate mit Polyoxyalkylen- und Fluoralkanresten als Seitengruppen. Die oberflächenaktiven Substanzen werden üblicherweise in Mengen von 0,01 bis 5 Gew.-Teilen, bezogen auf 100 Gew.-Teile der Komponente (b), eingesetzt.

Als geeignete Trennmittel seien beispielhaft genannt: Umsetzungsprodukte von Fettsäureestern mit Polyisocyanaten, Salze aus Aminogruppen enthaltenden Polysiloxanen und Fettsäuren, Salze aus gesättigten oder ungesättigten (cyclo)aliphatischen Carbonsäuren mit mindestens 8 C-Atomen und tertiären Aminen sowie insbesondere innere Trennmittel, wie Carbonsäureester und/oder -amide, hergestellt durch Veresterung oder Amidierung einer Mischung aus Montansäure und mindestens einer aliphatischen Carbonsäure mit mindestens 10 C-Atomen mit mindestens difunktionellen Alkanolaminen, Polyolen und/oder Polyaminen mit Molekulargewichten von 60 bis 400 g/mol, wie beispielsweise in EP 153 639 offenbart, Gemischen aus organischen Aminen, Metallsalzen der Stearinsäure und organischen Mono- und/oder Dicarbonsäuren oder deren Anhydride, wie beispielsweise in DE-A-3 607 447 offenbart, oder Gemischen aus einer Iminoverbindung, dem Metallsalz einer Carbonsäure und gegebenenfalls einer Carbonsäure, wie beispielsweise in US 4 764 537 offenbart.

Als Füllstoffe, insbesondere verstärkend wirkende Füllstoffe, sind die an sich bekannten, üblichen organischen und anorganischen Füllstoffe, Verstärkungsmittel, Beschwerungsmittel, Beschichtungsmittel usw. zu verstehen. Im einzelnen seien beispielhaft genannt: anorganische Füllstoffe, wie silikatische Mineralien, beispielsweise Schichtsilikate, wie Antigorit, Bentonit, Serpentin, Hornblenden, Amphibole, Chrisotil und Talkum, Metalloxide, wie Kaolin, Aluminiumoxide, Titanoxide, Zinkoxid und Eisenoxide, Metallsalze wie Kreide und Schwerspat, und anorganische Pigmente, wie Cadmiumsulfid, Zinksulfid sowie Glas u.a. Vorzugsweise verwendet werden Kaolin (China Clay), Aluminiumsilikat und Copräzipitate aus Bariumsulfat und Aluminiumsilikat sowie natürliche und synthetische faserförmige Mineralien, wie Wollastonit, Metall-und insbesondere Glasfasern verschiedener Länge, die gegebenenfalls geschlichtet sein können. Als organische Füllstoffe kommen beispielsweise in Betracht: Ruß, Melamin, Kollophonium, Cyclopentadienylharze und Pfropfpolymerisate sowie Cellulosefasern, Polyamid-, Poly-acrylnitril-, Polyurethan-, Polyesterfasern auf der Grundlage von aromatischen und/oder aliphatischen Dicarbonsäureestern und insbesondere Kohlenstofffasern.

Die anorganischen und organischen Füllstoffe können einzeln oder als Gemische verwendet werden und werden der Reaktionsmischung vorteilhafterweise in Mengen von 0,5 bis 50 Gew.-%, vorzugsweise 1 bis 40 Gew.-%, bezogen auf das Gewicht der Komponenten (a) bis (c), zugegeben, wobei jedoch der Gehalt an Matten, Vliesen und Geweben aus natürlichen und synthetischen Fasern Werte bis 80 Gew.-% erreichen kann.

Als Weichmacher und Hydrolyseschutzmittel können beispielsweise γ-Butyrolycton oder organische Carbonate eingesetzt werden.

Die Komponenten (a) bis (f) werden zur Herstellung eines erfindungsgemäßen Polyurethanintegralschaumstoffs in solchen Mengen miteinander vermischt, dass das Äquivalenzverhältnis von NCO-Gruppen der Isocyanate aus (a) zur Summe der reaktiven Wasserstoffatome der Komponenten (b), (c) und (d) 1 : 0,8 bis 1 : 1,25, vorzugsweise 1 : 0,9 bis 1 : 1,15 beträgt.

Die erfindungsgemäßen Polyurethanintegralschaumstoffe werden vorzugsweise nach dem oneshot-Verfahren mit Hilfe der Niederdruck- oder Hochdrucktechnik in geschlossenen, zweckmäßigerweise temperierten Formwerkzeugen hergestellt. Die Formwerkzeuge bestehen gewöhnlich aus Metall, z.B. Aluminium oder Stahl. Diese Verfahrensweisen werden beispielsweise beschrieben von Piechota und Röhr in "Integralschaumstoff", Carl-Hanser-Verlag, München, Wien, 1975, oder im "Kunststoff-Handbuch", Band 7, Polyurethane, 3. Auflage, 1993, Kapitel 7.

Die Ausgangskomponenten (a) bis (f) werden dazu vorzugsweise bei einer Temperatur von 15 bis 90 °C, besonders bevorzugt von 25 bis 55 °C gemischt und die Reaktionsmischung gegebenenfalls unter erhöhtem Druck in das geschlossene Formwerkzeug eingebracht. Die Vermischung kann mechanisch mittels eines Rührers oder einer Rührschnecke oder unter hohem Druck im sogenannten Gegenstrominjektionsverfahren durchgeführt werden. Die Formwerkzeugtemperatur beträgt zweckmäßigerweise 20 bis 160 °C, vorzugsweise 30 bis 120 °C, besonders bevorzugt 30 bis 60 °C. Dabei wird im Rahmen der Erfindung die Mischung der Komponenten (a) bis (f) bei Reaktionsumsätzen kleiner 90 %, bezogen auf die Isocyanatgruppen, als Reaktionsmischung bezeichnet.

Die Menge der in das Formwerkzeug eingebrachten Reaktionsmischung wird so bemessen, dass die erhaltenen Formkörper aus Integralschaumstoffen eine Dichte von 80 bis 800 g/L, bevorzugt von 100 bis 500 g/L besonders bevorzugt von 120 bis 400 g/ und insbesondere von 150 bis 300 g/L aufweisen. Die Verdichtungsgrade zur Herstellung der erfindungsgemäßen Polyurethanintegralschaumstoffe liegen im Bereich von 1,1 bis 8,5, vorzugsweise von 1,5 bis 7,0 und besonders bevorzugt 1,9 bis 6.

Ein weiterer Gegenstand der Erfindung ist ein Polyurethanintegralschaumstoff, erhältlich nach einem erfindungsgemäßen Verfahren. Erfindungsgemäße Polyurethanintegralschaumstoffe werden vorzugsweise als Schuhsohle, zum Beispiel für Straßenschuhe, Sportschuhe, Sandalen und Stiefel aber auch im Bereich von Automobilinnenausstattung, beispielsweise als Lenkräder, Kopfstützen oder Schaltknöpfe oder als Stuhlarmlehnen oder Motorradsitze verwendet. Besonders bevorzugt werden erfindungsgemäße Polyurethanintegralschaumstoffe als Schuhsohlen verwendet. Dabei wurde durch den Einsatz der Lösung (a) ein positiver Einfluss der thermoplastischen Polymere insbesondere auf die Zellgrößenverteilung und Dimensionsstabilität sowie auf die mechanischen Eigenschaften, wie Härte, Zugfestigkeit, Dehnung und Weiterreißfestigkeit, gefunden.

Im Folgenden soll die Erfindung anhand von Beispielen erläutert werden.

Verwendete Einsatzstoffe:
- MMA:: Methylmethacrylat der Firma Aldrich
- EHA:: Ethylhexylacrylat der Firma Aldrich
- HEMA:: Hydroxyethylmethacrylat der Firma Aldrich
- MEK:: Methylethylketon der Firma Aldrich
- V65:: Azostarter der Firma Wako
- Polyol 1:: Polyesterol auf Basis von Adipinsäure, Monoethylenglycol, Diethylengylcol und Trimethylolpropan mit einer OH-Zahl von 44 mg KOH/g
- Polyol 2:: Polyesterol auf Basis von Adipinsäure, Monoethylengylcol und Butandiol mit einer OH-Zahl von 56 mg KOH/g
- Polyol 3:: Polymerpolyesterol Hoopol PM 245® der Firma Synthesia
- Polyol 4:: Polyesterol auf Basis von Adipinsäure, Monoethylenegylcol, Butandiol und Trimethylolpropan mit einer OH-Zahl von 48 mg KOH/g Polyol 5: Polymerpolyesterol Hoopol PM 445® der Firma Synthesia
- Polyol 6:: Polyesterol auf Basis von Adipinsäure, Monoethylenegylcol, Diethylengylcol und Gylcerin mit einer OH-Zahl von 61 mg KOH/g
- Polyol 7:: Polyesterol auf Basis von Adipinsäure, Monoethylenegylcol, Diethylengylcol und Glycerin mit einer OH-Zahl von 60 mg KOH/g
- KV 1:: Monoethylengylcol
- KV 2:: Dipropylengylcol
- Cross 1:: Triethanolamin
- KAT 1:: Lupragen ® N 203 der Firma BASF
- KAT 2:: Bis(2-dimethylaminoethylether) in Dipropylenglycol
- KAT 3:: Katalysator XD 103 der Firma Air Products
- KAT 4:: 1-Methylimidazol
- Stabi 1:: Niax Silicone L-1540 der Firma GE Silicones
- Stabi 2:: Tegostab® BF 2370 der Firma Degussa
- Stabi 3:: Dabco® LK 221 der Firma Air Products
- Stabi 4:: Niax® Silicone SR 234 der Firma Momentive
- Ad 1:: Expancel® 051 DU 40 der Firma Akzo Nobel
- MDI 1:: Lupranat® MES der Firma BASF Polyurethanes (4,4'-MDI)
- MDI 2:: Lupranat® MM103 der Firma BASF Polyurethanes GmbH (Mischung aus 4,4'-MDI und carbodiimidmodifiziertem 4,4'-MDI
- MDI 3:: Lupranat® MI der Firma BASF Polyurethanes GmbH (Mischung aus 2,4'-MDI und 4,4'-MDI)
- MDI 4:: Lupranat® M20S der Firma BASF Polyurethanes GmbH (Polymer-MDI mit einer Viskosität von 210 mPas bei 25 °C)
- BH:: Basonat® H der Firma BASF SE (Hexamethylendiisocyanat)
- HS:: Hydrolyseschutzmittel
- BC:: Benzolychlorid
- Polymer 1:: Poly(Methylmethacrylat-co-Ehtylhexylacrylat)
- Polymer 2:: Poly(Methylmethacrylat-co-Hydroxyethylmethacrylat)
- Polymer 3:: Elvacite® 2552 Polymer auf Basis von Methylmethacrylat und Laurylmethacrylat der Firma Lucite International mit eine gewichtsmittleren Molekulargewicht von 75.000 g/mol
- Polymer 4:: Elvacite® 4055 Polymer auf Basis von Methylmethacrylat und Methacrylsäure der Firma Lucite International mit einem gewichtsmittleren Molekulargewicht von 5500 g/mol
- Polymer 5:: Elvacite® 2044 Polybutylmethacrylat mit einem gewichtsmittleren MolekulargewichtMw von 142.000 g/mol der Firma Lucite International
- Polymer 6:: Elvacite® 2008 Polymer auf Basis von Methylmethacrylat und Methacrylsäure mit einem gewichtsmittleren MolekulargewichtMw von 37.000 g/mol der Firma Lucite International
- Polymer 7:: Polymethylmethacrylat Mw 120000 g/mol von Aldrich
- Polymersynthese: Polymer 1:: Synthese von Poly(Methylmethacrylat-co-Ehtylhexylacrylat)

In einen 500 mL 4-Halskolben mit Thermometer, Blattrührer, Stickstoffspülung und Tropftrichter wurden 100g Methylethylketon (MEK), 15g Ethylhexylacrylat und 15g Methylmethacrylat (MMA) vorgelegt, mit 50 mg Wako V-65 versetzt und auf 68°C aufgeheizt. Nach erreichen der Temperatur wurden über einen Zeitraum von 2 Stunden 70g MMA zudosiert und jeweils nach einer Stunde 1,5mL einer Lösung aus 1,25g Wako V65 in 50 mL MEK zugeben. Nach Ende der Zugabe wurde für eine weitere Stunde bei 68°C gerührt, bevor 40mL einer Lösung aus 1,25g Wako V65 in 50mL MEK dosiert wurden. Alsdann wurde auf 75°C geheizt und für weitere 2 Stunden bei 75°C gerührt. Die Mischung wurde auf Raumtemperatur gekühlt, 100 g MEK zu gesetzt und anschließend das Polymer durch Fällung in Wasser isoliert und bis zur Gewichtskonstanz bei 75°C im Vakuum getrocknet.

Das Produkt wurde über IR und NMR spektroskopie characterisiert und für die weitere Synthese verwendet.
Polymer 2: Synthese von Poly(Methylmethacrylat-co-Hydroxyethylmethacrylat)
Lösung 1 enthält: 99g MMA, 1g Hydroxyethylmethacrylat und 100 g MEK
Lösung 2 enthält: 1,25g Wako V65 und 50 mL MEK

In einen 500 mL 4-Halskolben mit Thermometer, Blattrührer, Stickstoffspülung und Tropftrichter wurden 10g Lösung 1 und 1 mL Lösung 2 vorgelegt und auf 65°C aufgeheizt. Nach erreichen der Temperatur wurde über einen Zeitraum von 2 Stunden Lösung 1 zudosiert und jeweils nach einer Stunde 1,5mL einer Lösung 2. Nach Ende der Zugabe wurde für eine weitere Stunde bei 65 gerührt, bevor 40mL der Lösung 2 dosiert wurden. Alsdann wurde auf 75°C geheizt und für weitere 2 Stunden bei 75°C gerührt. Die Mischung wurde auf Raumtemperatur gekühlt und anschließend das Polymer durch Fällung in Wasser isoliert und bis zur Gewichtskonstanz bei 75°C im Vakuum getrocknet.

Das Produkt wurde über IR und NMR Spektroskopie sowie über Gelpermeationschromatographie charakterisiert und für die weitere Synthese verwendet. Die GPC zeigte ein gewichtsmittleres Molekulargewicht von 42.000 g/mol
Tabelle 1 mit den Versuchen B1 bis B5 zeigen die Löslichkeit von thermoplastischen Polymeren in unterschiedlichen Isocyanaten. Hierzu wurden jeweils 5g der Polymere 5, 6 oder 7 in das jeweils angegebene Isocyanat gegeben und unter Rühren auf 80 °C erhitzt.

**Tabelle 1:**

| Versuch | Polymer | Isocyanat | Löslichkeit |
|---|---|---|---|
| B1 | Polymer 5 | MDI 3 | + |
| B2 | Polymer 6 | MDI 3 | + |
| B3 | Polymer 7 | MDI 3 | + |
| B4 | Polymer 7 | MDI 2 | + |
| B5 | Polymer 7 | BH | + |

| | | | |
|---|---|---|---|
| + völlig löslich; - unlöslich | | | |

Es zeigte sich, dass das die thermoplastischen Polymere in den Beispielen B1-B5 vollständig in den Isocyanaten lösten.

Die Beispiele 6 und 7 zeigen die radikalische Polymerisation von Methylmethacrylat in Isocyanaten.

### Beispiel 6: radikalische Polymerisation von MMA in Lupranat M20S

In einen 2L Vierhalskolben wurden 1800g Lupranat M20S vorgelegt. 1 g Azostarter der Firma Wako (Waka V65) wurden in 200 g Methylmethacrylat gelöst und den Lupranat M20S zugesetzt. Die Mischung wurde auf 70°C erhitzt und 3 Stunden bei 70°C gerührt. Als dann wurden 0,75 g Wako V65 dem System zugesetzt und weitere 2 Stunden bei 70°C gerührt. Danach wurde die Reaktionsmischung auf 85°C aufgeheizt und eine weitere Stunde bei 85°C gerührt und anschließend abgekühlt. Das entstandene Produkt zeigte eine deutlich höhere Viskosität als Lupranat M20S und war durchsichtig. Auch nach 4-wöchiger Lagerung zeigte das Produkt keinerlei Trübung.

### Beispiel 7: radikalische Polymerisation von MMA und HEMA in Lupranat MI

In einen 2L Vierhalskolben wurden 1800g Lupranat MI vorgelegt. 1g Azostarter der Firma Wako (Waka V65) wurden in 198 g Methylmethacrylat und 2 g Hydroxyethylmethacrylat gelöst und den Lupranat MI zugesetzt. Die Mischung wurde auf 70°C erhitzt und 3 Stunden bei 70°C gerührt. Als dann wurden 0,75 g Wako V65 dem System zugesetzt und weitere 2 Stunden bei 70°C. Danach wurde die Reaktionsmischung auf 85°C aufgeheizt und eine weitere Stunde bei 85°C gerührt und anschließend abgekühlt. Das entstandene Produkt zeigte eine deutlich höhere Viskosität als Lupranat MI und war durchsichtig. Auch nach 4-wöchiger Lagerung zeigte das Produkt keinerlei Trübung.

Die Beispiele 8, 9 und 10 verdeutlichen die Prepolymerherstellung. Diese erfolgte über eine einheitliche Fahrweise. Zunächst wurden in einem entsprechenden Kolben mit Rührer, Thermometer, und Stickstoffeinleitung MDI 1 und MDI 2 vorgelegt und auf eine Temperatur von 60°C erwärmt. Bei dieser Temperatur wurde zunächst BC zur Mischung der Isocyanate geben. Alsdann wurde eine Mischung der Polyole (Polyol 2 und Polyol 4) mit dem Hydolyseschutzmittel HS zugeben und 1 Stunde bei 60°C gerührt bevor auf eine Temperatur von 80°C aufgeheizt und 2 Stunden bei 80°C gerührt wurde. Im Falle von ISO 2 bis ISO 4 wurde vor der Zugabe der Mischung der Polyole das Polymer 1 oder Polymer 3 zugeben und so lange gerührt, bis eine klare Lösung entstand. Die eingesetzten Ausgangsstoffe sind in Tabelle 2 angegeben.

**Tabelle 2: Prepolymerherstellung:**

| | ISO 1 (V) | ISO 2 (B) | ISO 3 (B) | ISO 4 (B) |
|---|---|---|---|---|
| MDI 1 | 53,999 | 53,999 | 52,940 | 52,426 |
| MDI 2 | 8,000 | 8,000 | 7,843 | 7,767 |
| HS | 1,000 | 1,000 | 0,980 | 0,971 |
| BC | 0,003 | 0,001 | 0,001 | 0,001 |
| Polyol 2 | 27,000 | 24,000 | 26,471 | 26,214 |
| Polyol 4 | 10,000 | 10,000 | 9,804 | 9,709 |
| Polymer 1 | - | 3,000 | - | - |
| Polymer 3 | - | - | 1,961 | 2,913 |
| | | | | |
| NCO-Prepolymer | 18,9 | 18,8 | 18,5 | 18,4 |

Die erhaltenen Prepolymere wurden gemäß Tabelle 3 weiter verarbeitet und jeweils einmal frei verschäumt und einmal in eine Sohlenform geben, sodass ein Formkörper mit einer Dichte von 300 g/L entstand.

**Tabelle 3:**

| | Vergleichsbeispiel V1 | B8 | B9 | B10 |
|---|---|---|---|---|
| Polyol 1 | 32,40 | 32,40 | 32,40 | 32,40 |
| Polyol 2 | 41,66 | 41,66 | 41,66 | 41,66 |
| Polyol 3 | 6,94 | 6,94 | 6,94 | 6,94 |
| Polyol 4 | 4,63 | 4,63 | 4,63 | 4,63 |
| KV 1 | 7,41 | 7,41 | 7,41 | 7,41 |
| KAT 1 | 0,60 | 0,60 | 0,60 | 0,60 |
| KAT 2 | 0,06 | 0,06 | 0,06 | 0,06 |
| KAT 3 | 1,67 | 1,67 | 1,67 | 1,67 |
| Stabi 1 | 0,42 | 0,42 | 0,42 | 0,42 |
| Stabi 2 | 0,42 | 0,42 | 0,42 | 0,42 |
| Stabi 3 | 0,28 | 0,28 | 0,28 | 0,28 |
| Ad 1 | 2,78 | 2,78 | 2,78 | 2,78 |
| Wasser | 0,74 | 0,74 | 0,74 | 0,74 |
| | | | | |
| Index | 94 | 94 | 94 | 94 |
| Prepolymer | ISO 1 | ISO 2 | ISO 3 | ISO 4 |

Nach 24 Stunden wurde Schrumpf des freigeschäumten Schaums und des Formköper betrachtet. Tabelle 4 gibt Aufschluss über die Ergebnisse der Beurteilung:

**Tabelle 4**

| | V1 | B8 | B9 | B10 |
|---|---|---|---|---|
| Frei geschäumt | -- | ++ | + | ++ |
| Formkörper | - | ++ | ++ | ++ |

| | | | | |
|---|---|---|---|---|
| -- starker Schrumpf; - Schrumpf; + kaum Schrumpf; ++ kein Schrumpf | | | | |

Wie aus den Beispielen B 8 bis B 10 ersichtlich ist, führen Polymethylmethacrylat-Copolymeren, gelöst in einem Prepolymeren, zu einer verbesserten Dimensionsstabilität des erhaltenen Polyurethans.

Neben der Verbesserung der Dimensionsstabilität kann der Einsatz von bestimmten Polymeren, gelöst in Prepolymeren, auch zu einer Verbesserung der mechanischen Eigenschaften des erhaltenen Polyurethanschaumstoffs führen. Dazu wurden die Isocyanatprepolymere ISO 5 bis ISO 9 wie in Tabelle 5 angegeben hergestellt:

**Tabelle 5**

| | ISO 5 (V) | ISO 6 (V) | ISO 7 (B) | ISO 8 (B) | ISO 9 (B) |
|---|---|---|---|---|---|
| MDI 1 | 61,347 | 66,997 | 61,100 | 66,983 | 66,495 |
| MDI 2 | 9,000 | 6,000 | 9,000 | 5,999 | 6,000 |
| HS | 0,65 | - | 0,65 | - | - |
| BC | 0,001 | 0,003 | 0,01 | 0,01 | 0,003 |
| KV 2 | - | - | - | 2,000 | - |
| Polyol 2 | 10,000 | - | 10,000 | - | - |
| Polyol 6 | 19,000 | - | 14,240 | - | - |
| Polyol 7 | - | 27,000 | - | 11,999 | 24,499 |
| Polymer 2 | - | - | 5,000 | - | - |
| Polymer 4 | - | - | - | 12,999 | 3,000 |
| | | | | | |
| NCO-Prepolymer | 22,0 | 23 | 21,9 | 22,3 | 22,8 |

Die Herstellung der der Prepolymere erfolgte über eine einheitliche Fahrweise. Zunächst wurden in einem entsprechenden Kolben mit Rührer, Thermometer, und Stickstoffeinleitung MDI 1 und MDI 2 vorgelegt und auf eine Temperatur von 60°C erwärmt. Bei dieser Temperatur wurde zunächst BC zur Mischung der Isocyanate geben. Alsdann wurde eine Mischung der Polyole zugeben und 1 Stunde bei 60°C gerührt bevor auf eine Temperatur von 80°C aufgeheizt und 2 Stunden bei 80°C gerührt wurde. Im Falle von ISO 7 bis ISO 9 wurde vor der Zugabe der Mischung der Polyole das Polymer 2 oder Polymer 4 zugeben und so lange gerührt bis eine klare Lösung entstand.

Die hergestellten Isocyanatprepolymere ISO 5 bis ISO 9 wurden in den Versuchen V2 und V3 sowie B11 bis B13 mit der in Tabelle 6 angegebenen Polyolkomponente bei einem Isocyanatindex von 94 vermischt und jeweils einmal frei verschäumt um das freie Raumgewicht zu bestimmen und in einer Form mit den Abmessungen 20cm*20cm*1cm geben um Prüfplatten für die Bestimmung der mechanischen herzustellen.

**Tabelle 6**

| | V2 | V3 | B11 | B12 | B13 |
|---|---|---|---|---|---|
| Polyol 2 | 62,91 | 84,80 | 62,91 | 84,80 | 84,80 |
| Polyol 3 | 27,64 | - | 27,64 | - | - |
| Polyol 5 | - | 5,00 | - | 5,00 | 5,00 |
| KV 1 | 6,89 | 7,50 | 6,89 | 7,50 | 7,50 |
| Cross 1 | 0,37 | - | 0,37 | - | - |
| Kat 1 | 1,29 | 1,30 | 1,29 | 1,30 | 1,30 |
| Kat 4 | - | 0,20 | - | 0,20 | 0,20 |
| Stabi 4 | 0,09 | - | 0,09 | - | - |
| Wasser | 0,77 | 1,20 | 0,77 | 1,20 | 1,20 |
| | | | | | |
| Index | 94 | 94 | 94 | 94 | 94 |
| Prepolymer | ISO 5 | ISO 6 | ISO 7 | ISO 8 | ISO 9 |

Die Reaktionscharakteristika und die Eigenschaften der erhaltenen Polyurethanintegralschaumstoffe sind in Tabelle 7 angegeben.

**Tabelle 7:**

| | V2 | V3 | B11 | B12 | B13 |
|---|---|---|---|---|---|
| Startzeit (s) | 10 | 14 | 11 | 16 | 16 |
| Steigzeit (s) | 49 | 52 | 47 | 62 | 60 |
| FRD (g/L) | 164 | 111 | 161 | 111 | 108 |
| FTD (g/L) | 300 | 250 | 300 | 250 | 250 |
| Härte (Asker C) | 50 | 49 | 55 | 69 | 55 |
| ZF (N/mm²) | 3,3 | 2,4 | 3,2 | 2,4 | 2,5 |
| Dehnung (%) | 296 | 291 | 275 | 250 | 285 |
| Split Tear (N/mm) | 2,3 | 2,3 | 2,5 | 3,5 | 2,4 |

Wie aus den Beispielen ersichtlich ist, führt der Einsatz von Polymethylmethacrylat Copolymeren zu Verbesserung der Split Tear und einer höheren Härte.

## Patentansprüche

1. Verfahren zur Herstellung von Polyurethanintegralschaumstoffen mit einer Dichte von 80 bis 800 g/L bei dem man
a) eine Lösung, enthaltend Polyisocyanat und thermoplastisches Polymer, mit
b) Polyolen,
c) Treibmitteln, und gegebenenfalls
d) Kettenverlängerungsmitteln und/oder Vernetzungsmitteln,
e) Katalysatoren und
f) sonstigen Hilfsmitteln und/oder Zusatzstoffen,
zu einer Reaktionsmischung vermischt, in eine Form gibt und zu einem Polyurethanschaumstoffformkörper ausreagieren lässt.

2. Verfahren nach Anspruch 1, **dadurch gekennzeichnet, dass** die Lösung a) im Wesentlichen keine weiteren Lösungsmittel enthält.

3. Verfahren nach Anspruch 1 oder 2, **dadurch gekennzeichnet, dass** der Anteil an thermoplastischem Polymer in der Lösung a) 0,1 bis 50 Gew.-%, bezogen auf das Gesamtgewicht der Lösung a) beträgt.

4. Verfahren nach einem der Ansprüche 1 bis 3, **dadurch gekennzeichnet, dass** das Polyisocyanat ein aromatisches Di- und/oder Polyisocyanat ist.

5. Verfahren nach einem der Ansprüche 1 bis 4, **dadurch gekennzeichnet, dass** die Lösung a) einen NCO-Anteil von mindestens 5 Gew.-% aufweist.

6. Verfahren nach einem der Ansprüche 1 bis 5, **dadurch gekennzeichnet, dass** das thermoplastische Polymer ausgewählt ist aus der Gruppe, bestehend aus Homopolymeren der C1-bis C20 Ester der (Meth)acrylsäure Copolymeren der C1-bis C20 Ester der (Meth)acrylsäure, Styrol-Butadien-Copolymeren, Acrylnitril-Butadien-Styrol-Copolymeren, Butadiencopolymeren, Polyvinylpyrrolidon oder Vinylpyrrolidoncopolymeren, Polyvinylacetat oder Vinylacetatcopolymeren oder Mischungen aus zwei oder mehreren dieser thermoplastischen Polymere.

7. Verfahren nach einem der Ansprüche 1 bis 6, **dadurch gekennzeichnet, dass** als Polyole Polyester eingesetzt werden.

8. Verfahren nach einem der Ansprüche 1 bis 7, **dadurch gekennzeichnet, dass** die Polyole b) Polymerpolyole enthalten.

9. Verfahren nach einem der Ansprüche 1 bis 7, **dadurch gekennzeichnet, dass** der Polyurethanintegralschaumstoff eine Dichte von 100 bis 500 g/L aufweist.

10. Polyurethanintegralschaumstoff, erhältlich nach einem der Ansprüche 1 bis 8.

11. Polyurethanintegralschaumstoff nach Anspruch 9, **dadurch gekennzeichnet, dass** der Polyurethanintegralschaumstoff eine Schuhsohle, ein Lenkrad, ein Schaltknopf, ein Motorradsitz oder eine Armlehne ist.
